# EUROPEAN PATENT APPLICATION

(11) **EP 4 047 553 A1**
(43) Date of publication of application: **24.08.2022**
(21) Application number: 21158127.7
(22) Date of filing: 19.02.2021
(51) Int. Cl.: G06T 7/20

(54) **MOTION COMPENSATION AND REFINEMENT IN RECURRENT NEURAL NETWORKS**

(71) Applicant: Aptiv Technologies Limited, 14004 St. Michael (BB)
(72) Inventor: Kossaczký, Igor, 42117 Wuppertal (BB); Labusch, Sven, 50737 Köln (BB); Meuter, Mirko, 40699 Erkrath (BB)
(74) Representative: Hoffmann Eitle

(57) **Abstract**

Provided is a computer-implemented method for tracking a motion of information in an environment of a vehicle, the method comprising: acquiring sensor-based data regarding the spatial environment of the vehicle for a plurality of timesteps, the sensor-based data defining the information in respective spatially resolved cells of the spatial environment; inputting, for each of the plurality of timesteps, the sensor-based data into a recurrent neural network, RNN, having one or more internal memory states; transforming, for each of the plurality of timesteps, the one or more internal states of the RNN by using a motion map describing a speed and/or a direction of the motion of the information of the respective spatially resolved cells of the sensor-based data individually; and using, for each of the plurality of timesteps, the transformed internal states in a processing of the RNN to track the motion of the information in the environment of the moving vehicle.

## Description

### Technical Field

The present disclosure relates to a device, a method and a computer program for tracking a motion of information in an environment of a vehicle. The device may be provided in a vehicle so that the motion of information related to objects or obstacles in the environment of the vehicle may be tracked.

### Background

Tracking information regarding objects in a spatial environment of a vehicle is an important function of autonomous driving.

Sensors, such as one or more cameras, radar and/or LiDAR sensors, are typically used to monitor and acquire sensor data of the environment of the vehicle. The sensor data can be input into algorithms developed to assign environmental information to objects or obstacles and to track that information over time, for example to determine whether another object or obstacle is on a collision course with the vehicle. Examples of such algorithms relate to neural networks, for example convolutional neural networks (CNN) or recurrent neural networks (RNN).

### Summary

### Technical Problem

In a neural network system, which can be trained to assign and track information over time in a spatial environment, it is crucial to consider the information's movement in space over time. We consider the situation where the information is spatially discretized on a grid, for example in a Polar grid or a Cartesian grid.

A common way to gather information in a neural network over multiple timesteps in a sequence is the use of recurrent neural networks (RNN) and especially Long Short-Term Memories, LSTMs (see e.g. Hochreiter et al.: "Long short-term memory", Neural computation, 9(8), 1735-1780, 1997). Such RNNs have been developed to address the problem that an error signal becomes increasingly smaller when the error signal or loss function is back-propagated from the output to the input of the neural network by learning from a short-term context. Such RNN-based networks are also predestined for use in autonomous driving, because driving will involve a large number of short-term relationships that a vehicle can learn and store during driving.

Convolutional LSTMs (ConvLSTMs) (e.g. Xingjian et al. "Convolutional LSTM network: A machine learning approach for precipitation nowcasting", In: Advances in neural information processing systems, pp. 802-810, 2015) have been established in recent years for handling spatially resolved data. A LSTM may have two internal states, a so-called cell state, responsible to hold long-term temporal information and a so-called hidden state that corresponds to the output of the LSTM. Both internal states accumulate also the information from the past. In case of a convolutional LSTM, these internal states as well as the input have the shape of a two-dimensional spatial map, possibly with several channels.

In this context, a determination should be made whether the spatial maps from different timesteps represent snapshots from different real-world spatial locations or not. This issue occurs, for example, for the case of images acquired by a moving camera or bird-eye view snapshots from radar or lidar mounted on a moving vehicle. In this case, the spatial information collected or acquired at one time step does not necessarily spatially match to the information collected or acquired at one or more of previous timesteps. Accumulating these non-matching spatial maps results in smeared internal states of the LSTM, which do not correspond to a single real-world spatial location anymore.

Each input to an LSTM can be seen as a snapshot of some real-world location, with a coordinate system corresponding to this location. In this snapshot, objects at their current positions can be recognized via characteristic features which makes them different from the surrounding. If we perform several snapshots at the same location and the objects do not move, they will have the same positions in all snapshots after overlying them. However, if the object or the sensor moves during snapshot recording, then the position of the object in the snapshot, or even the coordinate system associated with the snapshot changes. Then, after overlying the snapshots, the object can be seen at all locations corresponding to its trajectory or to the trajectory of the sensor -we call this effect smearing. As the ConvLSTM just merges the overlaid snapshots in sequential manner into internal states, this smearing also appears in those.

Learning from such smeared and not spatially aligned hidden states makes it very hard for a neural network to gather the information belonging to a cell and separate the information from those which are not corresponding to that cell. Therefore, the overall performance of the detection system will decrease.

Spatial transformer networks proposed in Jaderberg et al.: "Spatial transformer networks". In: Advances in neural information processing systems, pp. 2017-2025, 2015, aim for transforming a feature map into a different coordinate system. However, this transformation is not based on actual sensor or object motion, but rather learned and typically belongs into a simple class of transformations (e.g. a class of affine transformations). Moreover, this mechanism is not integrated with the RNN network components.

Another approach according to Patraucean et al.: "Spatiotemporal video autoencoder with differentiable memory". arXiv preprint arXiv:1511.06309 (2015) uses an LSTM cell to generate optical flow (which can be used to move the snapshots from one timestep to the next) to predict a next video frame, but the information flowing into the internal states of this LSTM is still not spatially aligned with this internal state.

This problem is further addressed in Nilsson et al.: "Semantic video segmentation by gated recurrent flow propagation", Proceedings of the IEEE Conference on Computer Vision and Pattern Recognition, pp. 6819-6828, 2018. Here, a hidden state of the gated recurrent unit (GRU) RNN unit is transformed into the current coordinate system using optical flow. Therefore, the hidden state is in each timestep aligned with the current coordinate system. However, the optical flow is generally only a mapping of image values (e.g. RGB-values) between subsequent timesteps and does not take into account speed information.

There is thus a need to overcome the technical limitations related to assigning and tracking motion information in an environment of a vehicle.

### Solution

The subject-matter of the independent claims solves the above-identified technical problems. The dependent claims describe further preferred embodiments. Thereby the motion of information related to objects in the environment of the vehicle, in particular non-stationary objects, can be advantageously determined.

According to a first aspect, a computer-implemented method for tracking a motion of information in an environment of a vehicle comprises: acquiring sensor-based data regarding the spatial environment of the vehicle for a plurality of timesteps, the sensor-based data defining the information in respective spatially resolved cells of the spatial environment; inputting, for each of the plurality of timesteps, the sensor-based data into a recurrent neural network, RNN, having one or more internal memory states; transforming, for each of the plurality of timesteps, the one or more internal states of the RNN by using a motion map describing a speed and/or a direction of the motion of the information of the respective spatially resolved cells of the sensor-based data individually; and use, for each of the plurality of timesteps, the transformed internal states in a processing of the RNN to track the motion of the information in the environment of the moving vehicle.

According to a second aspect the motion map incorporates a sensor motion compensation and an object motion compensation.

According to a third aspect the motion map is used to transform the internal states of the RNN to match the corresponding sensor-based data regarding the spatial environment of the vehicle at each of the timesteps.

According to a fourth aspect the motion map at a particular timestep is derived based on the internal states of a previous timestep and the inputted sensor-based data at the particular timestep.

According to a fifth aspect the transforming is performed by first transforming the internal states of the RNN due to a sensor motion and to use the transformed internal states to create an object motion map.

According to a sixth aspect the created object motion map is used to further transform the transformed internal state.

According to a seventh aspect the computer-implemented method further includes the step of distinguishing between moving objects and stationary objects in the inputted sensor-base data and the internal states.

According to an eight aspect the object motion compensation is done only for the moving objects.

According to a ninth aspect the tracked motion of information in the environment of the vehicle is used to assign an object.

According to a tenth aspect the tracked motion of information in the environment of the vehicle is used to track the object.

According to an eleventh aspect a computer program includes instructions which, when the program is executed by a computer, cause the computer to carry out the method of any of the first to tenth aspect.

According to a twelfth aspect a device for tracking a motion of information in an environment of a vehicle includes an acquisitioning unit configured to acquire sensor-based data regarding the spatial environment of the vehicle for a plurality of timesteps, the sensor-based data defining the information in respective spatially resolved cells of the spatial environment; a determining unit configured to: input, for each of the plurality of timesteps, the sensor-based data into a recurrent neural network, RNN, having one or more internal memory states; transform, for each of the plurality of timesteps, the one or more internal states of the RNN by using a motion map describing a speed and/or a direction of the motion of the information of the respective spatially resolved cells of the sensor-based data individually; and use, for each of the plurality of timesteps, the transformed internal states in a processing of the RNN to track the motion of the information in the environment of the moving vehicle.

According to a thirteenth aspect the device further includes comprising one or more radar antennas and/or one or more lasers and/or one or more cameras.

According to a fourteenth aspect the one or more radar antennas and/or lasers is/are configured to emit a signal and detect a return signal; and the acquisitioning unit is configured to acquire the acquired sensor data based on the return signal.

According to a fifteenth aspect a vehicle has one or more devices according to the twelfth to fourteenth aspect.

### Brief Description of Drawings

Fig. 1 shows a device according to an embodiment of the present disclosure.
Fig. 2 shows a device according to a preferred embodiment of the present disclosure for tracking a motion of information in a surrounding of a vehicle.
Fig. 3 shows a device according to a preferred embodiment when tracking a motion of information in a surrounding of a vehicle.
Fig. 4 shows radar data according to a preferred embodiment when tracking a motion of information in a surrounding of a vehicle.
Fig. 5 shows a flow chart of a method according to an embodiment of the present disclosure.
Fig. 6 shows an illustrative example of the individual motion of speed information and direction information of the respective spatially resolved cells.
Fig. 7 shows another embodiment of the present disclosure, in particular with regard to an RNN framework.
Fig. 8 shows another embodiment of the present disclosure, in particular with regard to another RNN framework.
Fig. 9 shows a computer according to a preferred embodiment.

### Description of Embodiments

Embodiments of the present disclosure will now be described in reference to the enclosed figures. In the following detailed description, numerous specific details are set forth. These specific details are only to provide a thorough understanding of the various described embodiments. Further, although the terms first, second, etc. may be used to describe various elements, these elements should not be limited by these terms. These terms are only used to distinguish one element from another.

A simple solution of the smeared internal states of the LSTM would be to compensate the internal states for the movement of the one or more sensors (camera, radar and/or LiDAR sensor). The movement of the one or more sensors is related to the vehicle movement on which the one or more sensors are mounted. That would mean that the spatial data represented in the internal states of the LSTM would be moved or compensated with regard to the coordinate system of the current snapshot at each timestep. In other words, the coordinate system of the current snapshot is dynamically adapted according to the movement of the vehicle (and thus the sensors) and this would be reflected in the spatial data represented in the internal states of the LSTM.

However, the present inventors have realized that this approach would correctly transform only the data parts in the internal states of the LSTM corresponding to the static real-world objects. The movement of the non-static objects is, however, composed of the sensor movement and the movement of the object (s) in the environment itself, with the later not being covered by the compensation. The following embodiments describe solutions to address this problem.

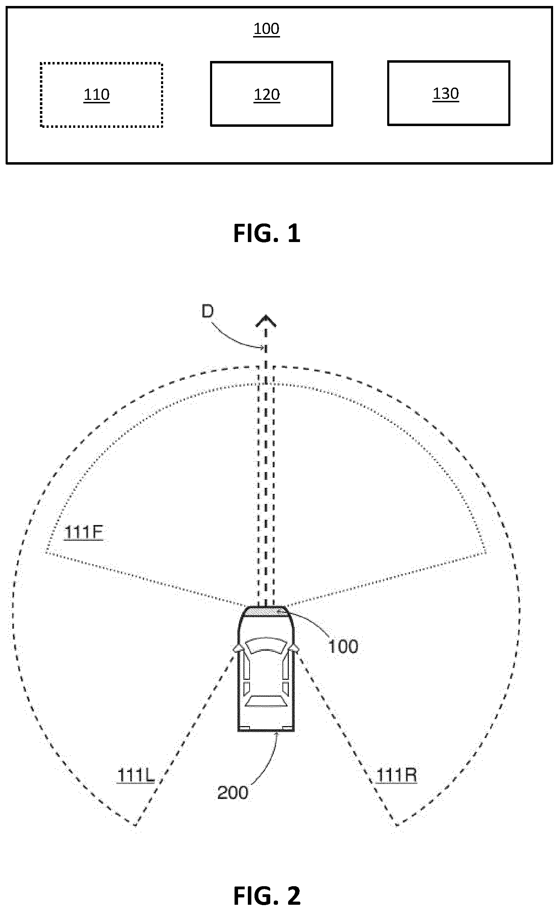

**Fig. 1** shows a device 100 according to an embodiment of the present disclosure for tracking motion information over time in an environment of a vehicle, in particular a moving vehicle. The device 100 may be provided to a vehicle 200 as shown in **Fig. 2** and, preferably, may be mounted on the vehicle 200 facing a driving direction (D) of the vehicle. The skilled person understands that it is not required that the device 100 faces the driving direction; the device 100 can also face to a side direction or to a rear direction. The device 100 may be a radar sensor, a radar module, part of a radar system or the like. The device 100 may also be a Light Detection and Ranging (LiDAR) type sensor, LiDAR type module or part of a LiDAR type system which uses laser pulses (in particular, infrared laser pulses) instead of radio waves. The device 100 may also be a camera. The vehicle 200 may also have more than one of such devices 100 or a combination of one ore more of a radar-based sensor, a LiDAR-based sensor, and/or a camera.

A vehicle 200 may be any land vehicle that is moved by machine power. Such a vehicle 200 may also be tied to railroad tracks, floating, diving or airborne. The figures exemplify this vehicle 200 as a car, with which the device 100 is provided. The present disclosure is, however, not limited thereto. Hence, the device 100 may also be mounted to e.g. a lorry, a truck, a farming vehicle, a motorbike, a train, a bus, an aircraft, a drone, a boat, a ship, a robot or the like.

As illustrated in **Fig. 1****,** the device 100 includes an acquisitioning unit 120 and a determining unit 130, and may additionally include one or more sensors 110, but the one or more sensors may also be provided separate to the device 100.

The following further illustrates an embodiment in which the one or more sensors 110 are radar-based sensors which include on or more radar antennas. Herein, the one or more antennas may be configured to emit radar signals, preferably modulated radar signals, e.g. a Chirp-Signal. A signal may be acquired or detected at the one or more antennas and is generally referred to as return signal below. Herein, the return signal(s) may result from a reflection of the emitted radar signal(s) on an obstacle or object (such as a pedestrian, another vehicle such as a bus or car or the like) in the environment or surrounding of the vehicle but may also include a noise signal resulting from noise which may be caused by other electronic devices, other sources of electromagnetic interference, thermal noise, and the like.

The one or more antennas may be provided individually or as an array of antennas, wherein at least one antenna of the one or more antennas of the radar sensor (s) 110 emits the radar signal (s), and at least one antenna of the one or more antennas detects the return signal(s). The detected or acquired return signal(s) represents a variation of an amplitude/energy of an electromagnetic field over time.

The acquisitioning unit 120 is configured to acquire radar data (sensor-based data) regarding each of the one or more radar antennas of the radar sensor(s) 110, the acquired radar data include range data and range rate (also referred to as Doppler) data. The acquisitioning unit 120 may acquire the return signal, detected at the one or more antennas, and may apply an analogue-to-digital (A/D) conversion thereto. The acquisitioning unit 120 may convert a delay between emitting the radar signal(s) and detecting the return signal(s) into the range data. The delay, and thereby the range data, may be acquired by correlating the return signal(s) with the emitted radar signal(s). The acquisitioning unit 120 may compute, from a frequency shift or a phase shift of the detected return signal(s) compared to the emitted radar signal(s), a doppler shift or a range-rate shift as the range rate data. The frequency shift or the phase shift, and thereby the range rate-data, may be acquired by frequency-transforming the return signal(s) and comparing its frequency spectrum with the frequency of the emitted radar signal(s). The determination of range data and range-rate / Doppler data from the detected return signal(s) at the one or more antennas may, for example, be performed as described in US 7,639,171 or US 9,470,777 or EP 3 454 079.

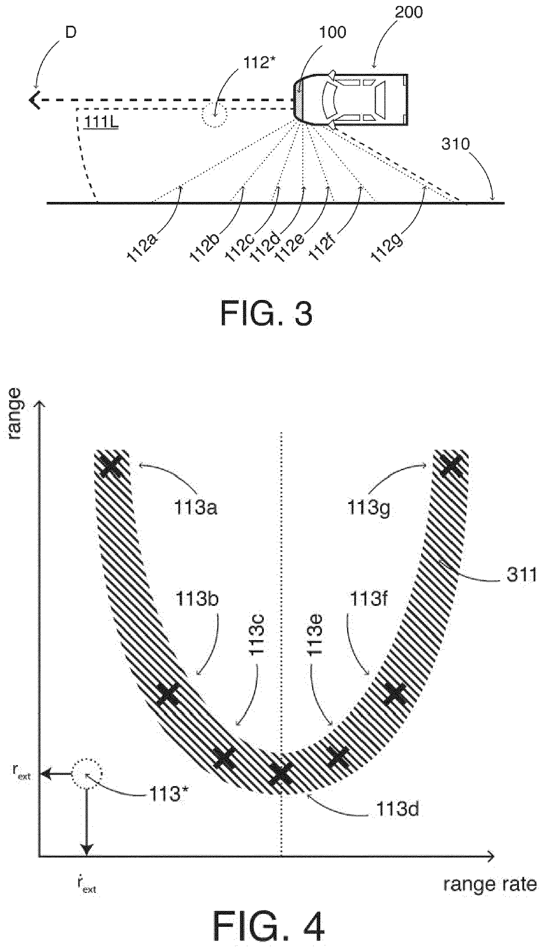

**Fig. 3** shows a vehicle 200 driving in a direction D parallel to an obstacle 310, e.g. a guardrail alongside a road. For simplicity, only the left detection area 111L is illustrated in **Fig. 3****.** For the left detection area 111L, for each of the one or more antennas of the sensor 110, the acquisitioning unit 120 may acquire radar data similar to that shown in **Fig. 4****.**

In **Fig. 4****,** the vertical axis schematically illustrates a range from the vehicle 200 (e.g. determined by use of the delay mentioned above) and may be measured in meters. In **Fig. 4****,** the horizontal axis illustrates a range rate relative to the vehicle 200 (e.g. determined by use of the doppler shift or the range-rate shift mentioned above) and may be measured in meters per second. In **Fig. 4****,** the dotted vertical line illustrates no speed relative to the vehicle 200 (doppler shift or range-rate shift). In **Fig. 4****,** the crosses 113 (i.e. 113a, ... 113g) illustrate information of the radar data related to the obstacle 310 as detected along dotted lines 112 (i.e. 112a, ... 112g) shown in **Fig. 3** within the left detection area 111L. In **Fig. 4****,** the shaded area 311 illustrates information of the radar data related to the obstacle 310 and may be determined based on the entire radar data, i.e. not only based on the crosses 113. In other words, the shaded area may be determined, for example, when applying a higher resolution, e.g. by increasing the number cells or bins/slots (leading to an increase of the number of crosses 113) above the number of crosses 113 shown in **Fig. 4****.** Since this increase would lead to more crosses 113, they are omitted in the illustration and, instead, indicated by the shaded area 311.

More specifically, with regard to the example of **Figs. 3 and 4****,** each cross 113 in **Fig. 4** illustrates a detection associated to a cell associated to a range and a range-rate. E.g. the radar signal may radially propagate from the device 100 and may be (partially) reflected from the obstacle 310 after some time. Some of the radar signal that may travel along line 112a, may take longer to return than some of the radar signal traveling along line 112d. Therefore, a reflection of the radar signal along line 112a may result in a longer delay than a reflection of the radar signal traveling along line 112d. Therefore, the range computed from to the reflection delay for the part of the radar signal traveling along line 112a may be longer than the range derived from the reflection delay for the part of the radar signal traveling along line 112d. Therefore, the cross 113a is at a range (or range bin or range slot) larger than the cross 113d. Because in **Fig. 3****,** the distances of lines 112a and 112g, of lines 112b and 112f, and of lines 112c and 112e, are respectively close to identical, the corresponding crosses 113a and 113g, 113b and 113f, and 113c and 113e in **Fig. 4** are located at a similar range, respectively. Due to the movement of the vehicle 200 in direction D, the reflections returning along lines 112 are detected with a phase and/or frequency shift different to each other. Therefore, a reflection along line 112a from a part of an obstacle 310 moving toward the device 200 results in a range rate smaller than a reflection along line 112g from a part of an obstacle 310 moving away from the device 200. The amount of the range rate is different for each of the reflections propagating along lines 112a, 112b, 112c, 112d, 112e, 112f and 112g. Therefore, each of the corresponding crosses 113 is located at a different range rate.

Although only seven lines 112 and seven crosses 113 are depicted in **Fig. 3 and 4****,** the number thereof is not limited thereto and instead is based on the resolution of the A/D-conversion of the return signal(s) and the resolution of the extraction of the radar data including range data and range rate data. The resolution of the A/D-conversion may be improved by utilizing an A/D-converter with a higher sampling rate and/or higher quantization capacity, e.g. with a 256, 512, 1024 or 2048 bit resolution. As mentioned above, the resolution of the extraction may be increased by increasing the number of bins or slots used in transformation, e.g. the DFT, FFT (e.g. ranging FFT, a range cut-off FFT, a Doppler FFT and/or a digital beam forming FFT).

In **Fig. 4****,** crosses 113 are depicted for parts of the shaded area 311 illustrating information of the radar data related to the obstacle 310. In particular, each cross 113 corresponds to a particular combination of range and range rate (i.e. bin or slot associated to each combination of range and range rate) provided in the radar data. Further, each combination of range and range rate has an associated numerical value corresponding to detection values, amplitude values, reflection amplitudes, energy values or the like. For example, the detection value for the respective bins may be determined by averaging over the number of antennas. Here, the crosses 113 merely illustrate combinations of range and range rate wherein the value associated to the return signal exceeds a certain detection threshold, i.e. a threshold that indicates the presence of an obstacle. On the other hand, although the area 113* in **Fig. 4** does not contain a cross, a non-zero or finite detection value is still provided for this combination of range and range rate since detected noise signals may also contribute to such a specific combination of range and range rate (bins). But for the range (or delay) and the range rate (or relative speed) corresponding to area 113*, no obstacle is present at the site indicated by reference sign 112* in Fig. 3. Therefore, no reflection contributes to the return signal (e.g. only noise is detected) for the combination of range and range rate (i.e. a bin or slot) corresponding to area 113*. Thereby, the value at this bin or slot indicates the absence of an obstacle 310 and therefore free space at site 112*.

Although an example of acquiring sensor-based data in the form of radar data is described above, the present disclosure is not limited in that regard, and the acquisition unit 120 may also acquire LiDAR-based sensor data and/or image data.

The acquisition unit 120 may acquire the sensor-based data in a data cube indicating, for example, range and angle values in a polar coordinate system, each for a plurality of range rate (Doppler) values. In such a case, the acquisition unit 120 (or alternatively the determining unit 130 described below) may be further configured to performs a conversion of the (range, angle) data values from polar coordinates into Cartesian coordinates, i.e. a conversion of the (range, angle) data values into (X, Y) data values. Advantageously, the conversion may be performed in such a way that multiple Cartesian grids with different spatial resolutions and spatial dimensions are generated, for example a near range (X, Y) grid having a spatial dimension of 80m by 80m and a spatial resolution of 0.5m/bin and a far range (X, Y) grid having a spatial dimension of 160m by 160m and a spatial resolution of 1m/bin.

In other words, given acquired sensor-based data in a bird's eye view (BEV) from, for example, a LiDAR or RADAR point cloud, first the point cloud may be converted into one or more grids in a world Cartesian coordinate system centred at the vehicle or ego-vehicle (e.g. an autonomous vehicle or robot). In this process, two parameters (spatial range and resolution) may be defined. In general, longer range and higher resolution are desired to detect more targets and better describe their shapes. However, longer range and higher resolution lead to higher memory requirements, memory consumption and higher computational costs.

That is, the sensor-based data are defined in respective spatially resolved cells of the spatial environment of the vehicle. The spatially resolved cells (which also be referred to as data bins or data slots) are thus defined in the environment of the vehicle with a specific spatial resolution (such as 0.5m/cell). The grid cells may thus be defined according to spatial indices i and j, and a grid cell may include spatially resolved sensor-based information, such as intensity values, range values or the like in a 2D grid defined by i and j. The grid cells may further be defined according to another index k with regard to spatially resolved speed information such as based on range (Doppler) rates.

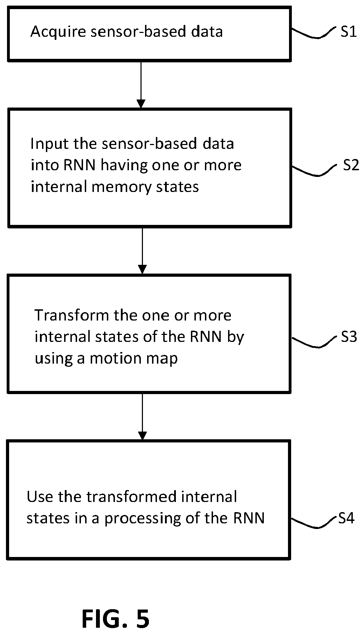

**Fig. 5** shows a flow chart according to a method of an embodiment of the present disclosure on the basis of these acquired sensor-based data. The computer-implemented method shown in **Fig. 5** is for tracking a motion of information over time in an environment of a vehicle, in particular a moving vehicle. A motion of information may be understood here as a time-dependent change of spatially resolved sensor-based information related to speed and direction of that information which may also be understood as a spatially resolved motion of sensor-based data related to speed and direction. For example, it describes that a sensor-based measurement value indicating a radar reflection at a first specific position moves to a second specific position thus indicating a direction, and also describes how a sensor-based measurement value indicating speed is changing over time.

According to a first step S1 of **Fig. 5****,** the sensor-based data regarding the spatial environment of the moving vehicle is acquired for a plurality of timesteps. As explained, the sensor-based data are defined in respective spatially resolved cells (bins or slots) of the spatial environment, and the cells (bins or slots) may be defined with regard to positional information and/or speed information, for example with regard to position and/or speed of an obstacle, an object (such as another vehicle or a person or animal) or the like. The sensor-based data are acquired for a plurality of timesteps t₁, t₂, ..., t_{N}, each timestep representing a so-called snapshot (i.e. full sensor data acquisition) of the environment of the vehicle at a respective current time. It is understood that the spatial environment may change due to a movement of the vehicle itself as well as due to the movement of non-stationary objects in the environment.

According to a second step S2 of **Fig. 5****,** the sensor-based data are input, in each timestep, into a recurrent neural network, RNN, having one or more internal memory states. The RNN may have, for example, a first internal state and a second (different) internal state and may thus be referred to as an RNN with Long Short-Term Memory, LSTM. The first internal state may be the co-called memory cell state to hold long-term temporal information, and the second internal state may be the so-called hidden state that corresponds to the output of the LSTM. As both internal states accumulate information of the past, they improve the motion compensation and motion refinement with regard to the prediction capabilities of recurrent neural networks. The internal states have the same spatial resolutions as the sensor-based data, possibly each with several internal channels. Other than that, the RNN may be any RNN relying on a spatial grid, e.g. a convolutional LSTM.

According to a third step S3 of **Fig. 5****,** the one or more internal memory states of the RNN are transformed, for each of the plurality of timesteps, by using a motion map. Here, the motion map describes or indicates a speed and/or direction of the motion of the information of the respective spatially resolved cells of the sensor-based data individually.

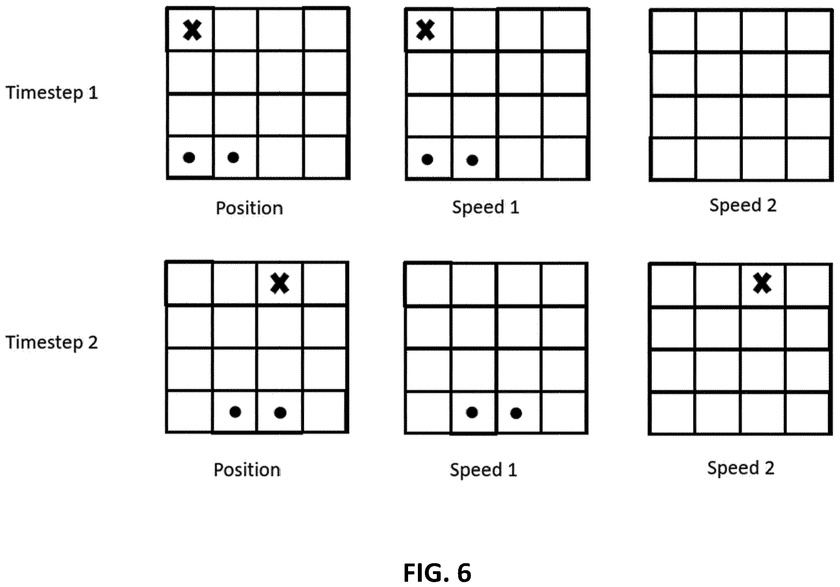

**Fig. 6** show an illustrative example of the individual motion of speed information and direction information of the respective spatially resolved cells. In particular, **Fig. 6** illustrates an example of spatially resolved cells regarding position and speed components at the corresponding positions for two timesteps. As indicated in the left panel corresponding sensor-based data values ● have been detected in timestep 1 on two positions (i1, j1) and (i2, j1) and another sensor-based data value × has been detected on a position (i1, j4). It is noted that the respective sensor-based data values may indicate different values, indicating different reflection properties, for example, and thus indicating that the reflections are the result of different objects. It is further illustrated that in the left panel corresponding sensor-based data values ● in timestep 2 are on the positions (i2, j1) and (i3, j1) thus indicating an individual direction of the information regarding the sensor-based data values from i1 → i2 and i2 → i3 while j1 is not changed. In addition, the other sensor-based data value × has been detected in timestep 2 on a position (i3, j4) thus indicating an individual direction of the information regarding the sensor-based data value from i1 → i3 while j4 is not changed.

As further indicated in the middle panel the corresponding sensor-based data values ● have been detected in timestep 1 on the two positions (i1, j1) and (i2, j1) and with regard to a first speed value (k1). In timestep 2, the corresponding sensor-based data values ● have been moved to (i2, j1) and (i3, j1) as explained above with regard to the left panel of **Fig. 6** while the speed value (k1) has not changed, thus indicating a constant speed value over the timesteps 1 and 2. On the other hand, while the sensor-based data value × has been detected on a position (i1, j4) and for the first speed value (k1) in timestep 1, this sensor-based data value × has been detected on a position (i3, j4) and for a second speed value (k2) in timestep 2, thus indicating that the speed value has been increased from k1 → k2 in timestep 1 to 2. This generally describes an individual speed information motion mapping on the level of the sensor-based data values.

It is noted that **Fig. 6** describes a simplified and nonlimiting example to illustrate the underlying concept of the motion mapping. In an actual implementation, the spatially resolved grid cells includes a larger amount of grid cells and speed components.

The motion map may be determined or derived on the basis of the internal state(s) of the previous timestep (describing a past state) and the input of the sensor-based data at the present timestep, as just illustrated in **Fig. 6****.** Importantly, the motion map may be determined with regard to motion information of direction and speed on an individual grid cell level which is thus a more refined motion information as compared to a global map or conventional optical flow information which does not include speed information.

That is, the motion map uses motion information encoded in the features of the internal states and the inputted sensor-based data. In particular, the internal states features can hold motion information as they are having information on multiple timesteps.

The motion map may be determined by using a trained neural network algorithm that uses the internal state(s) at the previous timestep and the sensor-based data at the current timestep as input and is trained to identify individual speed and/or direction changes between the previous timestep and the current timestep.

The motion map may advantageously incorporate a sensor motion compensation and an object motion compensation. That is, the one or more sensors mounted at the vehicle and providing the sensor-based data described above have an intrinsic sensor motion when the vehicle is moving. This sensor motion is to be distinguished from the motion of the objects in the environment of the vehicle (for which no additional information may be available in addition to the sensor-based data). As the vehicle may have further sensors to determine a vehicle speed or acceleration (ego-motion) and/or yaw, pitch and roll of the vehicle, such information may additionally be used to determine the motion map and thus to identify the individual information motion related to (non-stationary) objects and thus provide an object motion compensation (apart from the ego-motion).

Then, by applying the thus determined motion map, the internal state(s) are transformed as defined by the motion map. That is, whether the motion map indicates a translation, a rotation, or any other transformation with regard to speed and/or directional changes of motion information of individual spatially resolved cells, this individual transformation is equally applied to the internal state(s) which have the identical spatial resolution.

In a further embodiment the transformation may be differentiable with respect to both of its inputs: The internal state(s) as well as the motion map. This property is important to train the module, as with this property the gradients can flow backwards through the transformation module to its two inputs in the backpropagation step of the training. Gradient flow through the internal states is mandatory for the functionality of an RNN. In addition, this property enables the determination of the motion map being learnable itself.

Proofing differentiability may be done in application of the chain rule, i.e. if the transformation is the composition of differentiable functions, which are potentially easier and well known, it is differentiable itself. One example for a differentiable transformation can be found in the former cited publication of Jaderberg et al.: "Spatial transformer networks" (In: Advances in neural information processing systems, pp. 2017-2025, 2015) in paragraph 3.3.

This means that the determined motion map is used to transform the internal states of the RNN to match the corresponding individual sensor-based data motion in the spatial environment of the vehicle at each of the timesteps. As an illustrative example, given an individual sensor-based data motion in subsequent timesteps in the cell grids from
i1, j1, k1 → i2, j2, k1 indicating that a feature has spatially moved from (*i1*, *j1*) → (*i2, j2*) (e.g. based on range data) while the speed has not changed *k1* → *k1* (e.g. based on range rate data) in the motion map, an equal motion transformation is applied to the internal state(s). In other words, the actual individual sensor-based data motion, as encoded in the motion map, is used to perform a counterpart transformation in the internal state(s).

According to a fourth step S4 of **Fig. 5****,** for each of the plurality of timesteps, the transformed (according to step S3) internal state(s) are subsequently used in the processing of the RNN to track the motion information in the sensor-based data in the environment of the (moving) vehicle, i.e. to track motion information regarding direction and/or speed in individual grid cells. It is noted that no object assignment or object detection has to be made yet at this level of the processing.

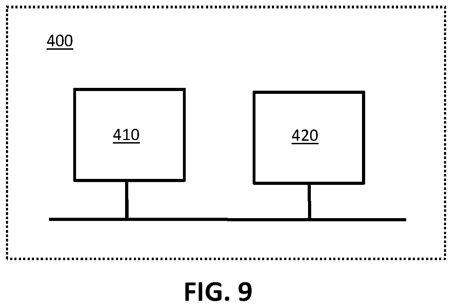

The above described method may be stored as a computer program in the memory 410 of a computer 400, which may be a board computer of the vehicle, a computer of a device, radar sensor, radar system and may be executed by a processor 420 of the computer 400 as depicted in **Fig. 9****.**

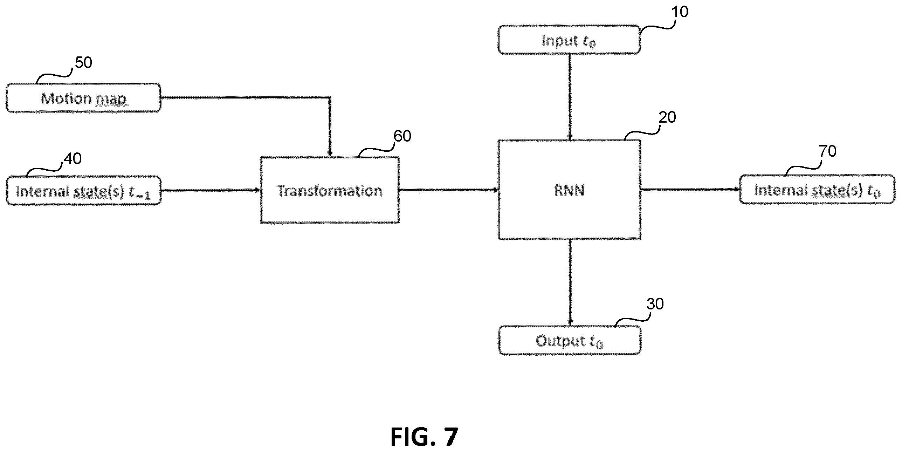

**Fig. 7** shows another embodiment of the present disclosure, in particular with regard to an RNN framework.

Here, the input 10 refers to the input of acquired sensor-based data into the RNN 20, here indicated with regard to a timestep *t₀*. The RNN has one or more internal state(s), here indicated with reference sign 40 for a previous timestep *t₋₁* as well as with reference sign 70 for the current timestep *t₀* (and output of the RNN 20). A motion map 50 describing the individual speeds and direction of each spatial cell of the sensor-based data in the current timestep *t₀* is determined on the basis of the internal state(s) which hold motion information of the past, as described above, and the motion map 50 is used in a transformation module 60 to transform also the internal state(s) and to thus avoid the presence of smeared internal states. Using these transformed internal state (s) in the internal processing of the RNN 60, the RNN provides an output 30 that allows to track the motion of the information over multiple timesteps.

With this motion compensation the RNN can concentrate on the temporal merge of information and does not have to assign objects and identify objects' motions and compensate them on its own which is a difficult task. Especially convolutional LSTMs usually consists of only one stacked convolutional layer with a limited receptive field, which makes it very hard to identify objects' motions only given the input and the internal states.

In another embodiment, the tracked motion of the information, as output from the RNN, may subsequently be used to assign an object thereto. As an illustrative example, while the motion of the feature information (as shown, for example, in Fig. 5) on the spatial cell level is tracked by the RNN, a subsequent neural network module may associate and assign a particular object to the feature information, such as a car, a bus, a person or the like. As explained, the operation of this subsequent neural network may be simplified as it already is provided with the motion of feature information with regard to direction and speed as an input. Based on the assigned object, the object's motion in the environment may then be tracked over time.

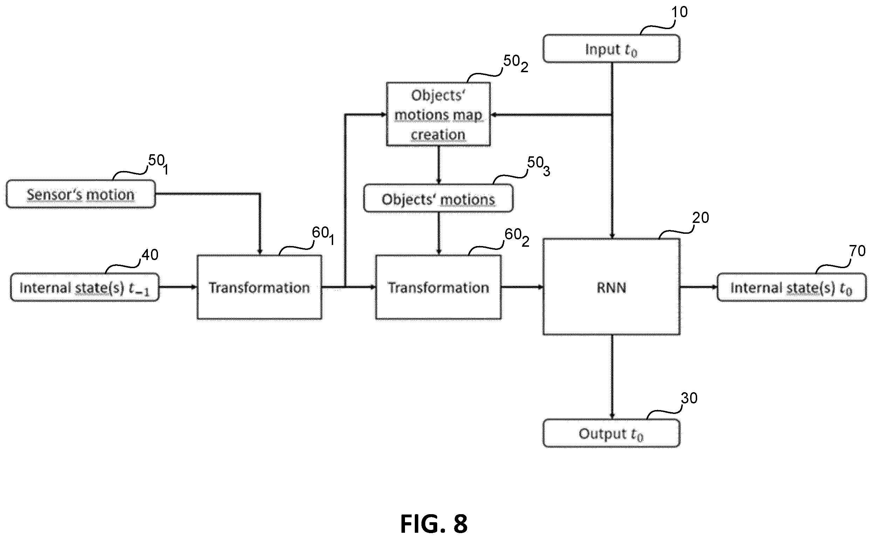

**Fig. 8** shows another embodiment of the present disclosure, in particular with regard to another RNN framework.

As explained above, the motion compensation may comprise two parts, that is (i) a sensor's motion compensation and (ii) an objects' motions compensation. If available, a motion map may be used which includes both motions. But especially if the internal state (s) of the past is used to create the motion map, it will be beneficial to first sensor motion compensate the internal state and then use the compensated state to create the motion map consisting of the objects' motions. The sensor's motion is often known a priori. In particular, as described above, the vehicle may have further sensors to determine a vehicle speed or acceleration (ego-motion) and/or yaw, pitch and roll of the vehicle, such information may be used to first perform a sensor motion compensation. **Fig. 8** shows an embodiment of an RNN framework that applies this principle.

In **Fig. 8** the input 10 again refers to the input of acquired sensor-based data into the RNN 20, here indicated with regard to a timestep *t₀*. The RNN 20 has one or more internal state(s), here indicated with reference sign 40 for a previous timestep *t₋₁* as well as with reference sign 70 for the current timestep *t₀* (and output of the RNN 20). A first sensor motion map 50₁ describing the sensor motion (as known, for example, based on an additional vehicle sensor) is used to perform a first transformation 60₁ that compensates the internal state (s) 40 of the RNN for the ego-motion of the vehicle. For example, if it is a priori known that the vehicle moves with a speed 20 km/h, the transformation 60₁ compensates this ego-motion by applying a corresponding translation transformation 60₁. Another example is a right turn of the vehicle by 90° or the like. Such a vehicle movement (and detected by an acceleration sensor or the like) may be compensated in the internal state(s) 40 by applying a corresponding rotation transformation 60₁. Naturally, more complex vehicle movements may be compensated by applying more a complex transformation 60₁.

As explained above, the transforming is performed by first transforming the internal states 40 of the RNN 20 due to a sensor motion 50₁ (and thus ego-motion of the vehicle) and to use the transformed internal states to create an object motion map 50₃.

In particular, an object motion map creation module 50₂ is shown in **Fig. 8** that derives the object motion map (also referred to as objects' motion map) on the basis of the transformed internal states (transformed due to the sensor motion alone) and the inputted sensor-based data 10 at the particular timestep. Here, the object motion map again described a speed and/or a direction of the motion of the information of respective spatially resolved cells of the sensor-based data individually, but here only for the non-stationary objects in the environment. That is a more accurate procedure to track information with regard to the non-stationary objects in the environment, as the own ego-motion of the vehicle can be accurately compensated first.

As further shown in Fig. 8, the created object motion map 50₃ may subsequently be used to further transform 60₂ the transformed internal state. While the internal states of the RNN are thus transformed twice according to the RNN framework in **Fig. 8** such a framework has the advantage of a more accurate determination of information regarding non-stationary objects.

The above RNN frameworks may be further improved by distinguishing between moving objects and stationary objects in the inputted sensor-base data and the internal states, for example based on the data values related to range (Doppler) rate. Such an additional distinction may be used when deriving the motion maps, in particular the object motion map 50₃.

In other words, if it is possible, it can be also beneficial to split the features in the input and the internal states into information features for moving objects and those for stationary ones. With this split the sensor's motion compensation still needs to be done on both feature types, but the objects' motions compensation only needs to be done on the moving features, thus simplifying the compensation and making the objects' motions compensation more accurate. If the objects' motions regression is done with neural network modules, usually a smooth output is provided. However, objects like cars have sharp boundaries. If the features are split into moving and stationary, this smooth output has no negative effect on the feature transformation as two moving objects usually have a certain distance to each other and no information belonging to stationary objects is transformed wrongly with the non-sharp transformation.

As neural networks are differentiable and provide continuous mappings the output tends to have no "big jumps". For example, consider Fig. 6 in timestep 2, the dot at cell (i2, j1) in the middle column: Usually a network is not predicting a "zero" in the cells (i2, j4), (i2, j3), (i2, j2) and then a completely different value in cell (i2, j1). Instead the cell (i2, j2) would usually already tend in the direction of the value of (i2, j1). In contrast to that, objects like cars usually have these sharp boundaries, i.e. a car can be in cell (i2, j1), but not in cell (i2, j2). Therefore, the predicted speed in cell (i2, j2) is potentially indicating a moving object in that cell when there is none. If we have a split of the features in moving and stationary features and just transform the moving features with the predicted objects' motions map, this leakage effect of speed in cell (i2, j2) is not a problem as there are no moving features in this cell which can be transformed mistakenly.

The above described embodiments are based on one or more motion maps. Here, a motion map describes the speeds and directions of each spatial cell of the sensor-based data individually. With this map the internal states of the LSTM RNN are transformed to match the current snapshot.

Whereas conventional RNNs do not have explicit mechanisms to compensate sensor's and especially objects' motions, the present disclosure introduces a scheme to explicitly compensate these spatial misalignments. This can reduce the number of features and the sizes of the receptive fields of an RNN and therefore its costs. On the other hand, this explicit compensation avoids smearing effects which can decrease the overall performance of a neural network system.

As described above, the present disclosure uses motion maps that can be generated based on the input as well as the internal states of the RNN itself. Therefore, it can make use of motion information encoded in the features or information of the internal states and the inputs. Especially the internal states' features or information can hold motion information as they are having information of multiple timesteps. In contrast to the approach from Nilsson et al.: "Semantic video segmentation by gated recurrent flow propagation", Proceedings of the IEEE Conference on Computer Vision and Pattern Recognition, pp. 6819-6828, 2018, the proposed embodiments above do not rely on optical flow calculated between two consecutive input images to the RNN in time and additionally uses speed information.

The present disclosure with properly chosen transformations is fully differentiable, and therefore can be used in an end to end trained neural network. Moreover, learnable parameters can be also included into any part of this framework. The resulting RNN framework is differentiable. In particular, a loss signal based on a difference between a predicted outcome and a ground truth may be used to backpropagate information for training both the parameters of the RNN as well as the module for deriving the motion maps.

The entire RNN framework described above may be trained on the basis of publicly available datasets such as the Waymo dataset (https://waymo.com/open/data/), the KITTI dataset (http://www.cvlibs.net/datasets/kitti/), the NuScenes dataset (https://www.nuscenes.org/), the PeRL dataset (http://robots.engin.umich.edu/SoftwareData/Ford), the Oxford RobotCar dataset (https://robotcardataset.robots.ox.ac.uk/datasets/) and the like, see also https://www.ingedata.net/blog/lidar-datasets which are available for both LiDAR-based data sets as well as radar-based data sets. In the case in which publicly available datasets in the form of point clouds are used, the point clouds may be converted into Cartesian grids with specific spatial ranges and resolutions.

Alternatively, the training data may be multiple sequences of data cubes recorded from road scenarios, as well as the manually labeled targets (also known as ground truth). The sequences may be cut into small chunks with a fixed length. As such, the training data may be formatted as a tensor of size N×T×S×R×A×D, where N is the number of training samples (e.g. 50k) in which each training sample may include a set of bounding boxes, T is the length of chunk (e.g. 12 time stamps), S is the number of sensors (e.g. 4), R is number of range bins (e.g. 108), A is number of angle bins (e.g. 150), D is number of Doppler bins (e.g. 20). The RNN may take a certain number of training samples (also referred to as batch size, e.g. 1 or 4 or 16, dependent GPU memory availability of the like), calculate the outputs and the loss with respect to ground truth labels (i.e. a difference between the ground truth and the detection result), update network parameters by backpropagation of the loss, and iterate this process until all the N samples are used. This process is called an epoch (i.e. one cycle through the full training dataset). The RNN may be trained with multiple epochs, e.g. 10, to get a result that minimizes errors and maximizes accuracy. The above specific numerical values are examples for performing a training process of the neural network.

It will be apparent to those skilled in the art that various modifications and variations can be made in the entities and methods of this disclosure as well as in the construction of this disclosure without departing from the scope or spirit of the disclosure.

The disclosure has been described in relation to particular embodiments which are intended in all aspects to be illustrative rather than restrictive. Those skilled in the art will appreciate that many different combinations of hardware, software and/or firmware will be suitable for practicing the present disclosure.

Moreover, other implementations of the disclosure will be apparent to those skilled in the art from consideration of the specification and practice of the disclosure disclosed herein. It is intended that the specification and the examples be considered as exemplary only. To this end, it is to be understood that inventive aspects lie in less than all features of a single foregoing disclosed implementation or configuration. Thus, the true scope and spirit of the disclosure is indicated by the following claims.

## Claims

1. A computer-implemented method for tracking a motion of information in an environment of a vehicle, the method comprising:
acquiring (S1) sensor-based data regarding the spatial environment of the vehicle for a plurality of timesteps, the sensor-based data defining the information in respective spatially resolved cells of the spatial environment;
inputting (S2), for each of the plurality of timesteps, the sensor-based data into a recurrent neural network, RNN, having one or more internal memory states;
transforming (S3), for each of the plurality of timesteps, the one or more internal states of the RNN by using a motion map describing a speed and/or a direction of the motion of the information of the respective spatially resolved cells of the sensor-based data individually; and
using (S4), for each of the plurality of timesteps, the transformed internal states in a processing of the RNN to track the motion of the information in the environment of the moving vehicle.

2. The computer-implemented method of claim 1, wherein the motion map incorporates a sensor motion compensation and an object motion compensation.

3. The computer-implemented method of any one of claims 1 - 2, wherein the motion map is used to transform the internal states of the RNN to match the corresponding sensor-based data regarding the spatial environment of the vehicle at each of the timesteps.

4. The computer-implemented method of any one of claims 1 - 3, wherein the motion map at a particular timestep is derived based on the internal states of a previous timestep and the inputted sensor-based data at the particular timestep.

5. The computer-implemented method of any one of claims 1 - 4, wherein the transforming is performed by first transforming the internal states of the RNN due to a sensor motion and to use the transformed internal states to create an object motion map.

6. The computer-implemented method of claim 5, wherein the created object motion map is used to further transform the transformed internal state.

7. The computer-implemented method of any one of claims 1 - 6, further including the step of distinguishing between moving objects and stationary objects in the inputted sensor-base data and the internal states.

8. The computer-implemented method of claim 7, wherein the object motion compensation is done only for the moving objects.

9. The computer-implemented method of any one of claims 1 - 8, wherein the tracked motion of information in the environment of the vehicle is used to assign an object.

10. The computer-implemented method of claim 9, wherein the tracked motion of information in the environment of the vehicle is used to track the object.

11. A computer program comprising instructions which, when the program is executed by a computer (400), cause the computer (400) to carry out the method of any of claims 1 - 10.

12. A device (100) for tracking a motion of information in an environment of a vehicle, wherein the device (100) comprises:
an acquisitioning unit (120) configured to acquire sensor-based data regarding the spatial environment of the vehicle for a plurality of timesteps, the sensor-based data defining the information in respective spatially resolved cells of the spatial environment;
a determining unit (130) configured to:
input, for each of the plurality of timesteps, the sensor-based data into a recurrent neural network, RNN, having one or more internal memory states;
transform, for each of the plurality of timesteps, the one or more internal states of the RNN by using a motion map describing a speed and/or a direction of the motion of the information of the respective spatially resolved cells of the sensor-based data individually; and
use, for each of the plurality of timesteps, the transformed internal states in a processing of the RNN to track the motion of the information in the environment of the moving vehicle.

13. The device (100) of claim 12, further comprising one or more radar antennas and/or one or more lasers and/or one or more cameras (110).

14. The device (100) of any one of claims 12 - 13, wherein
the one or more radar antennas and/or lasers (110) is/are configured to emit a signal and detect a return signal; and
the acquisitioning unit (120) is configured to acquire the acquired sensor data based on the return signal.

15. A vehicle (200) having one or more devices (100) according to any one of claims 12 - 14.
